# EUROPÄISCHE PATENTSCHRIFT

(11) **EP 0 896 766 B1**
(45) Veröffentlichungstag und Bekanntmachung des Hinweises auf die Patenterteilung: **02.06.2004**
(21) Anmeldenummer: 97916355.7
(22) Anmeldetag: 21.03.1997
(51) Int. Cl.: H04H 3/00

(54) **VERFAHREN ZUM AUFBAU EINES TRANSPORTDATENSTROMES**
PROCESS FOR DESIGNING A TRANSPORT DATA STREAM
PROCEDE POUR CONSTITUER UN FLUX DE DONNEES DE TRANSPORT

(30) Priorität: 30.04.1996 DE 19617293
(43) Veröffentlichungstag der Anmeldung: 17.02.1999
(73) Patentinhaber: ROBERT BOSCH GMBH, 70442 Stuttgart (DE)
(72) Erfinder: MAHN, Hendrick, D-81927 Muenchen (DE)
(86) Internationale Anmeldenummer: PCT/DE1997/000586
(87) Internationale Veröffentlichungsnummer: WO 1997/041656

(56) Entgegenhaltungen:
- WO-A-96/12360
- US-A- 5 218 717
- US-A- 5 220 676
- NACHRICHTENTECHNISCHE BERICHTE, Nr. 6, 1.Oktober 1989, Seiten 65-70, XP000234687 PETRI G: "AUTOMATISCHER LAUFZEITAUSGLEICH FUER EIN GLEICHWELLENFUNKNETZ" in der Anmeldung erwähnt
- NACHRICHTENTECHNISCHE BERICHTE, Nr. 6, 1.Oktober 1989, Seiten 57-64, XP000234686 ROETSCH G: "SIGNALISIERUNG IM GLEICHWELLENFUNKNETZ ANWENDUNG IM CITYRUF -SYSTEM" in der Anmeldung erwähnt

## Beschreibung

### Stand der Technik

Die Erfindung geht aus von einem Verfahren gemäß dem Oberbegriff des Patentanspruchs 1. Ein solches Verfahren ist bekannt aus der WO-A-96 12360.

Bei dem aus der WO-A-96 12360 bekannten Verfahren zur Synchronisation eines Telekommunikationsnetzes werden in das übertragene Multiplexsignal Zeitmarken für spezielle Übertragungsverzögerungen sowie ein Referenzsignal eingebunden. Jede relative Verzögerung des Telekommunikationsnetzes wird lokal kompensiert. Dieses Verfahren eignet sich zur Synchronisierung von SFN (Single-Frequency-Network)-Übertragungsnetzen. Es ist dort allerdings nur eine Betriebsart möglich. In der vorgegebenen Rahmenstruktur sind nur zwei Zusatzpakete vorgesehen.

Die Sendeanlagen in Gleichwellennetzen müssen synchronisiert werden, um einen ordnungsgemäßen Betrieb zu gewährleisten. Es gibt mehrere Konzepte für einen automatischen Laufzeitausgleich in Gleichwellennetzen (ANT Nachrichtentechnische Berichte, Heft 6, Oktober 1989, Seiten 65-70) :
- Die Laufzeiten auf den Modulationsleitungen werden gemessen und die Laufzeitdifferenz durch Einschleifen zusätzlicher Verzögerungen so kompensiert, daß die Phasenbedingung eingehalten wird,
- die auszusendenden Datensignale werden über die Modulationsleitung zu den Sendern übertragen und dort zunächst zwischengespeichert. Die Aussendung der Daten wird dann durch ein Triggersignal synchron bei allen Sendern gestartet.

Bei dem zuletzt genannten Verfahren mit Zwischenspeicherung ist das Synchronsignal ausschlaggebend für die Einhaltung der Phasenbedingung. Für die Verbreitung des Synchronsignals scheidet eine Übertragung über die Modulationsleitungen aus, weil das Problem der unterschiedlichen Leitungslaufzeiten auch hier zum Tragen kommt. Es bleibt somit nur eine Verbreitung des Synchronsignals auf dem Funkweg. Dazu bedarf es an jedem Senderstandort zusätzlich eines Empfängers für das Synchronsignal und ggf. zusätzlich eines eigenen Senders für das Synchronsignal. Darüber hinaus ist zusätzlicher Hardwareaufwand in Form eines FIFO-Speichers in jedem Sender erforderlich.

Andere Vorschläge gehen von der Ableitung des Synchronsignals von einem Zeitzeichensender, z. B. DCF77, aus. Die dabei erreichte Synchronität läßt sich aber nur mit aufwendigen Empfängern erreichen, die eine Auswertung der Phasenmodulation der Normalzeitaussendung vornehmen. Arbeitet man dagegen mit dem erstgenannten verfahren, bei dem die Laufzeiten auf den Modulationsleitungen gemessen werden, so bietet sich bei relativ niedrigem Aufwand folgendes Vorgehen an: an einem Ende der Modulationsleitung, zweckmäßigerweise am Sender wird eine Brücke geschaltet. Am anderen Ende der Leitung kann dann mit einem entsprechenden Messgerät die Laufzeitsumme von Hin- und Rückleitung gemessen werden.

Dieses Verfahren wird z. B. manuell durchgeführt, wenn ein fester Ausgleich der Leitungslaufzeiten durch Einschleifen zusätzlicher Verzögerungseinrichtungen erfolgen soll. Bei Sendern die ihre Modulationssignale über physikalische Vierdrahtleitungen erhalten, hat sich dieses Verfahren bereits bewährt. Bei aktiven Übertragungswegen können allerdings erhebliche Unterschiede in den Laufzeiten von Hin- und Rückleitung auftreten. Zur Vermeidung dieses Nachteils bietet sich die Möglichkeit ein Modulationssignal vom gemeinsamen Sternpunkt des Sendernetzes über einen Sender abzustrahlen und mit einem Messempfänger am Sternpunkt wieder aufzunehmen. Es kann also die reale Laufzeit des Signals vom Sternpunkt über die Modulationsleitung und den Sender bis zurück zum Sternpunkt ermittelt werden. Dieses läßt sich nacheinander für jeden Sender durchführen und die jeweils ermittelten Laufzeitdifferenzen werden durch Einstellen von zusätzlichen Verzögerungen auf einen vorgegebenen Endwert ergänzt.

Beim System Cityruf wird der automatische Laufzeitausgleich in einem Funkrufkonzentrator vorgenommen und lediglich der Ablauf des automatischen Laufzeitausgleichs durch die Funkrufvermittlungsstelle iniziiert. Es werden dort zur Synchronisation Testfolgen über das Sendernetz gesendet, die im Funkrufkonzentrator empfangen und ausgewertet werden. Ein Mikroprozessor erzeugt die erforderlichen Steuertelegramme, welche nacheinander alle angeschlossenen Sender für die Dauer der Messtelegramme auftasten. Gleichzeitig wird synchron zur Ausgabe des Messtelegramms eine Zeitmarke generiert. Die ausgesendeten Testfolgen werden von einem Laufzeitempfänger aufgenommen. Nach der Signaldemodulation liefert dieser ein NRZ-Signal an eine Takt- und Daten-Regenerierschaltung. Mit dem so zurückgewonnenen Takt wird das empfangene Datensignal in eine Mustererkennung eingelesen, die einen Vergleich zwischen dem empfangenen Datenstrom und dem festabgespeicherten Inhalt der Testfolge durchführt. Sobald Übereinstimmung festgestellt wurde, gibt die Mustererkennung einen Stopp-Impuls aus.

Aus ANT-Nachrichtentechnische Berichte, Heft 6, Oktober 1989, Seiten 57-64 ist ein Rahmenaufbau für einen Transportdatenstrom in einem Funkrufsystem bekannt. Die Sendestellen werden dort durch Schalttelegramme gesteuert. Neben Informationen über die Betriebsarten und die Frequenzsteuerung enthält ein solcher Transportdatenstrom Synchronworte und Informationen für einen automatischen Laufzeitausgleich.

### Vorteile der Erfindung

Mit den Maßnahmen gemäß den Merkmalen des Patentanspruchs 1 läßt sich auf besonders einfache Weise eine Synchronisation von Sendeanlagen, insbesondere von Sendeanlagen in einem terrestrischen Gleichwellennetz, erzielen. Die Ansprüche 2 bis 8 zeigen vorteilhafte Weiterbildungen auf.

Mit dem Verfahren nach der Erfindung ist es möglich, sowohl die Parameter für die Abstrahlung am Sender selbst zu übergeben, als auch eine exakte Synchronisation aller Gleichwellensender zu gewährleisten. Damit kann praktisch auf eine zusätzliche Fernsteuerung der Sendeanlagen sowie auf eine zusätzliche Synchronisation der Sender verzichtet werden.

Der Aufbau des Transportdatenstromes nach der Erfindung eignet sich zur Übertragung von MPEG2-Tansportströmen unterschiedlicher Struktur sowie anderer Paketdatenströme, die in einen Transportdatenstrom gemäß der Erfindung untergebracht werden. Insbesondere kann der erfindungsgemäße Transportdatenstrom für SFN(Single-Frequency-Network)-Zubringersysteme verwendet werden. Der Aufbau des Transportdatenstroms nach der Erfindung gewährleistet, daß bei einer Verteilung eines Signals in einem Gleichwellennetz an allen Sendestandorten des Gleichwellennetzes zur gleichen Zeit das gleiche Signal takt- und phasensynchron bereitgestellt werden kann und eine zusätzliche Steuerung, beispielsweise in Form von Abstrahlungsparametern für das Gleichwellennetz, weitgehend vermieden wird. Ohne großen Mehraufwand lassen sich zusätzliche Steuerinformationen übertragen. Es müssen keine zusätzlichen Steuerinformationen, z. B. GPS-Marken, Festzeitzeichen, z.B. gemäß WO-A-9612360, übertragen werden oder Modemverbindungen aufgebaut werden. Damit kann auf eine zusätzliche Fernsteuerung der Sendeanlagen sowie auf eine zusätzliche Synchronisation der Sender verzichtet werden.

### Zeichnungen

Figur 1 zeigt Beispiele für die Kenngrößen für verschiedene Betriebsarten (Abstrahlungsmodi),

Figur 2 den Aufbau eines Gesamtrahmens eines Transportdatenstromes nach der Erfindung und

Figur 3 den Aufbau der Zusatzpakete.

### Beschreibung von Ausführungsbeispielen

Die Erfindung basiert auf drei aufeinander aufbauenden Abschnitten. Der erste umfaßt die Struktur der Transportstrompakete. Es wird eine Anzahl von verschiedenen vorgegebenen Betriebsarten (Ausstrahlungsmodi) für terrestrische Ausstrahlung (Gleichwellennetz) definiert, deren Datenraten durch Teilung aus einer vorgegebenen Datenrate, z. B. einer Zuführungsdatenrate von 34,368 Mbit/sec. ableitbar sind. Die Teilung erfolgt hierbei über einen gemeinen Bruch. Bild 1 zeigt Beispiele verschiedener Ausstrahlungsmodi, z. B. 64 DAPSK (Differential-Amplitude-Spaceshift-Keying), 16 DAPSK, DQPSK (Differential-Quarternary-Spaceshift-Keying) mit verschiedenen Coderaten. Als Coderate ist hier die Anzahl der Informationsbits pro Blocklänge bezeichnet
(F. J. Furrer, Fehlerkorrigierende Block-Codierung für die Datenübertragung, Birkhäuser-Verlag, Basel 1981, Seiten 52 und 53). Neben dem Ausstrahlungsmode ist der Teilungsfaktor angegeben, aus dem sich die Datenrate durch Teilung aus 34,368 Mbit/sec. (Zuführungsdatenrate) ableiten läßt. Ebenfalls dargestellt ist die zum Abstrahlungsmode gehörige Anzahl der Datenpakete n und Zusatzpakete m. Zu jedem Abstrahlungsmode ist außerdem ein Code (1. Spalte) angegeben.

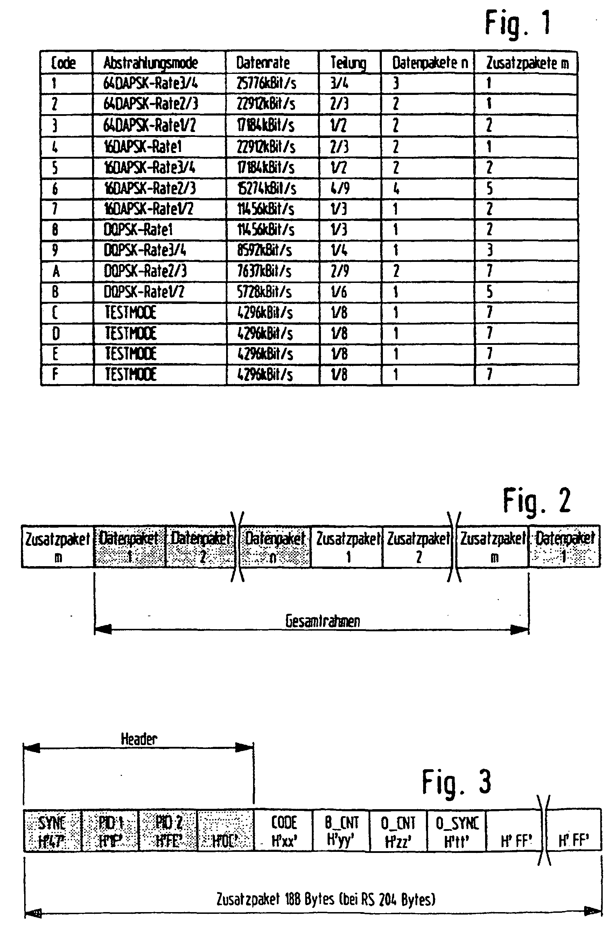

Der zweite Abschnitt gibt die Reihenfolge und Anzahl der Daten- und Zusatzpakete im Transportstrom an und definiert die Positionen an denen sich die Zusatzpakete befinden (Figur 2). Dabei umfaßt der Gesamtrahmen die Zahl an Paketen, die sich im Nenner des Teilerfaktors befinden. Wird ein Gesamtrahmen gesendet, so wird zuerst die Zahl an Datenpaketen gesendet, deren Wert sich im Zähler des Teilerfaktors befindet. Anschließend werden soviele Zusatzpakete gesendet, bis der Gesamtrahmen mit Paketen ausgefüllt ist (Figur 2). Alternativ hierzu können die Datenpakete und Zusatzpakete auch beispielsweise abwechselnd ineinandergeschachtelt werden. Damit ergibt sich die Zahl an Daten- bzw. Zusatzpaketen, die in der Tabelle von Figur 1 angegeben ist.

Der dritte Abschnitt definiert den Inhalt der Zusatzpakete (Bytes) und enthält die eigentliche Steuerungs- und Synchronisationsinformation. Die Zusatzpakete haben den in Figur 3 dargestellten Aufbau. Die verwendeten Kürzel haben folgende Bedeutung:

| | |
|---|---|
| SYNC | Synchroninformation im H' ..., |
| PID 1,2 | Programm-Identifikator-(Adresse) |
| | |
| CODE | Codeinformation (8 Bit breit) |
| | |
| B_CNT | Paketcounter (8 Bit breit) |
| O_CNT | Gesamtrahmenzähler (8 Bit breit) |
| | |
| O_SYNC | Synchronisation |
| | für den Gesamtrahmenzähler (8 Bit). |

Die darunter dargestellten Bytes sind Hexadezimalzahlen H' ... FF steht für den binären Wert B "1111 1111". Er repräsentiert momentan, daß keine Information in diesen Bytes enthalten ist.

Bei der Aussendung eines Gesamtrahmens wird im ersten Byte des Payload (hinter dem Header) die Codeinformation übertragen. Sie dient in der Sendeanlage der Auswahl des Taktteilungsverhältnisses, welches in direktem Zusammenhang mit der Datenrate steht (s. Figur 1: Teilung) und der Steuerung des nachfolgenden Modulators. Wird von einer Sendeanlage dieses Byte H'XX' empfangen, so stellt sie den entsprechenden Taktteiler (Teilungstakt = Zuführungsfrequenz x Teilung) ein. Die resultierende Frequenz ist jedoch nicht phasensynchron zu der anderer Sendeanlagen. Das zweite Byte H' YY' dient der Taktphasen- und der Datensynchronisation. Es zählt die Pakete eines Gesamtrahmens und ist im letzten Paket des Gesamtrahmens gleich 0. Aufgrund der Länge des Gesamtrahmens als Verhältnis von Zuführungsfrequenz zu Teilungsfrequenz haben zu diesem Zeitpunkt beide Frequenzen stets die gleiche Phasenlage zueinander. Diese Phasenlage wird in jeder Sendeanlage bestimmt (2. Byte = 0) und die Teilungsfrequenz wird solange verschoben, bis ein bestimmter Wert der Phasenlage erreicht ist. Dieser Wert der Phasenlage ist für jeden Abstrahlungsmode fest vorgegeben. Die Signallaufzeit des Zuführungsnetzwerkes wird vorher durch einen Einmeßvorgang aller Gleichwellensender abgeglichen. Damit kann sichergestellt werden, daß alle Sendeanlagen eine Teilungsfrequenz gleicher Frequenz- und Phasenlage haben. Parallel zur Taktphasensynchronisation erfolgt die Datensynchronisation. Sind Teilungsfrequenz und Taktphasen eingestellt, so werden zur Datensynchronisation nach dem nächsten synchronbyte (2. Byte = 0) alle Datenpakete in einen Zwischenspeicher geschrieben und mit dem darauffolgenden Synchronbyte beginnt die Datenausgabe an den Modulator. Da in einem Synchronrahmen genau so viele gültige Datenbyte von der Zuführung geliefert werden, wie der Modulator abstrahlt, senden zwei unabhängig voneinander arbeitende Modulatoren (die zu unterschiedlichen Zeiten gestartet wurden) zur gleichen Zeit die gleichen Daten mit gleicher Frequenz- und Phasenlage ab (Gleichwellenbetrieb).

Weiter können in den übrigen Bytes andere Steuer-, Status- oder Synchronisationsinformationen übertragen werden, z. B. eine Rahmensynchronisation für differentielle Übertragungssysteme.
Das erfindungsgemäße Verfahren eignet sich beispielsweise auch zur Übertragung von QPSK-, QAM- und/oder OFDM-Signalen.

## Patentansprüche

1. Verfahren zum Aufbau eines Transportdatenstromes zur Synchronisation von Sendeanlagen eines Netzes, wobei der Transportdatenstrom aus Daten- und Zusatzpaketen in einem Gesamtrahmen gebildet wird und wobei in den Zusatzpaketen Steuerungs- und Synchronisationsinformationen sowie Informationen über die Betriebsarten untergebracht werden, **gekennzeichnet durch** folgende Schritte:
- die Datenraten der Daten- und Zusatzpakete werden für verschiedene vorgegebene Betriebsarten aus einer vorgegebenen Zuführungsdatenrate **durch** Teilung abgeleitet, wobei die Teilung so erfolgt, daß die Zahl der Datenpakete oder Zusatzpakete **durch** die Zahl der Daten- und Zusatzpakete des Gesamtrahmens geteilt wird,
- die Anzahl der Daten- und Zusatzpakete im Transportdatenstrom wird aus dem Teilerverhältnis der Datenraten bestimmt,
- in dem Gesamtrahmen werden zuerst Datenpakete an vorgegebenen Positionen untergebracht und anschließend so viele Zusatzpakete untergebracht, bis der Gesamtrahmen ausgefüllt ist oder die Datenpakete und Zusatzpakete ineinander verschachtelt im Gesamtrahmen untergebracht werden,
- in die Zusatzpakete werden zumindest folgende Informationsblöcke eingebracht:
- eine Codeinformation zur Auswahl des Datenraten-Teilungsverhältnisses,
- einer Information zur Taktphasen- und/oder Datensynchronisation,
- es wird die Phasenlage in einer Sendeanlage bestimmt und solange verschoben, bis ein bestimmter vorgegebener Wert der Phasenlage erreicht ist und zwar derart, daß alle Sendeanlagen des Netzes eine Teilungsfrequenz gleicher Frequenz- und Phasenlage haben.

2. Verfahren nach Anspruch 1, **dadurch gekennzeichnet, daß** in die Zusatzpakete weitere Informationsblöcke eingebracht werden mit Steuer-, Status- und/oder Synchronisationsinformationen.

3. Verfahren nach Anspruch 2, **dadurch gekennzeichnet, daß** in die Zusatzpakete Informationsblöcke zur Rahmensynchronisation für differentielle Übertragungssysteme untergebracht werden.

4. Verfahren nach einem der Ansprüche 1 bis 3, **dadurch gekennzeichnet, daß** in Abhängigkeit der von einer Sendeanlage empfangenen in einem Zusatzpaket enthaltenen Information über die Datenrate der Betriebsarten, nämlich die Codeinformation, ein entsprechender Taktteiler eingestellt wird.

5. Verfahren nach Anspruch 4, **dadurch gekennzeichnet, daß** nach Einstellung gleicher Frequenz- und Phasenlagen und dem Empfang einer in einem Zusatzpaket enthaltenen Synchroninformation im Gesamtübertragungsrahmen alle Datenpakete in einen Zwischenspeicher eingespeichert werden und mit dem Empfang einer weiteren Synchroninformation für die Aussendung ausgelesen werden und einem entsprechenden Modulator für den Sendebetrieb zugeführt werden.

6. verfahren nach einem der Ansprüche 1 bis 5 für den Aufbau von Audio-, Video- und/oder Daten-Transportströmen.

7. Verfahren nach einem der Ansprüche 1 bis 5 für die Übertragung von differentiellen Datenströmen, DAPSK-, DQPSK-, QPSK-, QAM- und/oder OFDM-Signalen mit unterschiedlichem Fehlerschutz.

8. Verfahren nach einem der Ansprüche 1 bis 5 für SFN(Single-Frequency-Network)-Zubringersysteme.

## Claims

1. Method for setting up a transport data stream for synchronizing transmission installations in a network, where the transport data stream is formed from data packets and supplementary packets in a total frame and where the supplementary packets accommodate control and synchronization information and also information about the modes of operation, **characterized by** the following steps:
- the data rates of the data packets and supplementary packets are derived for various prescribed modes of operation from a prescribed supply data rate by division, the division being performed such that the number of data packets or supplementary packets is divided by the number of data packets and supplementary packets in the total frame,
- the number of data packets and supplementary packets in the transport data stream is determined from the data rates' division ratio,
- the total frame first accommodates data packets at prescribed positions and then accommodates as many supplementary packets as it takes for the total frame to be full, or the data packets and supplementary packets are accommodated in the total frame so as to be interleaved in one another,
- the supplementary packets receive at least the following information blocks:
- a code information item for selecting the data rate division ratio,
- an information item relating to clock-phase and/or data synchronization,
- the phase is determined in a transmission installation and is shifted until a particular prescribed value for the phase has been achieved, specifically such that all the transmission installations in the network have a division frequency with the same frequency and phase.

2. Method according to Claim 1, **characterized in that** the supplementary packets receive further information blocks with control, status and/or synchronization information.

3. Method according to Claim 2, **characterized in that** the supplementary packets accommodate information blocks relating to the frame synchronization for differential transmission systems.

4. Method according to one of Claims 1 to 3, **characterized in that** the information about the data rate of the modes of operation, namely the code information, which is received from a transmission installation and is contained in a supplementary packet is taken as a basis for setting a corresponding clock divider.

5. Method according to Claim 4, **characterized in that** the setting of the same frequencies and phases and the receipt of a sync information item, contained in a supplementary packet, in the total transmission frame are followed by all the data packets being stored in a buffer store and being read out for transmission upon receipt of a further sync information item and being supplied to a corresponding modulator for transmission mode.

6. Method according to one of Claims 1 to 5 for setting up audio, video and/or data transport streams.

7. Method according to one of Claims 1 to 5 for transmitting differential data streams, DAPSK, DQPSK, QPSK, QAM and/or OFDM signals with different error protection.

8. Method according to one of Claims 1 to 5 for SFN (Single Frequency Network) provider systems.

## Revendications

1. Procédé pour constituer un flux de données de transport permettant la synchronisation d'installations d'émission d'un réseau, le flux de données de transport étant constitué de paquets de données et de paquets supplémentaires au sein d'une trame globale, et les paquets supplémentaires contenant des informations de commande et de synchronisation ainsi que des informations relatives aux modes de fonctionnement,
**caractérisé par**
les étapes suivantes :
- pour différents modes de fonctionnement prédéterminés, les débits de données des paquets de données et des paquets supplémentaires sont issus de la division d'un débit de données d'alimentation prédéterminé, la division s'effectuant de telle sorte que le nombre de paquets de données ou de paquets supplémentaires est divisé par le nombre de paquets de données et de paquets supplémentaires de la trame globale,
- le nombre de paquets de données et de paquets supplémentaires présents dans le flux de données de transport est déterminé à partir du rapport de division des débits de données,
- dans la trame globale, les paquets de données sont tout d'abord stockés au niveau de positions prédéterminées, puis des paquets supplémentaires sont ajoutés jusqu'à ce que la trame globale soit remplie ou que les paquets de données et les paquets supplémentaires soient stockés de manière emboîtée les uns dans les autres au sein de la trame globale,
- les paquets supplémentaires contiennent au moins les blocs d'informations suivants :
- une information codée permettant de choisir le rapport de division des débits de données,
- une information permettant la synchronisation des phases d'horloge et/ou des données,
- la position de phase dans une installation d'émission est déterminée et est retardée jusqu'à ce qu'une valeur particulière prédéterminée de la position de phase soit atteinte et de telle sorte que toutes les installations d'émission du réseau aient une fréquence de division présentant la même position de fréquence et de phase.

2. Procédé selon la revendication 1,
**caractérisé en ce que**
les paquets supplémentaires contiennent d'autres blocs d'informations contenant des informations de commande, d'état et/ou de synchronisation.

3. Procédé selon la revendication 2,
**caractérisé en ce que**
les paquets supplémentaires contiennent des blocs d'informations permettant la synchronisation de trame pour des systèmes de transmission différentiels.

4. Procédé selon l'une quelconque des revendications 1 à 3,
**caractérisé en ce qu'**
un diviseur d'horloge correspondant est réglé en fonction de l'information contenue dans un paquet supplémentaire et reçue par une installation d'émission, relative au débit de données des modes de fonctionnement, c'est-à-dire en fonction de l'information codée.

5. Procédé selon la revendication 4,
**caractérisé en ce qu'**
après le réglage des positions de fréquence et de phase identiques et la réception, dans la trame de transmission globale, d'une information de synchronisation contenue dans un paquet supplémentaire, tous les paquets de données sont stockés dans une mémoire intermédiaire et, à la réception d'une autre information de synchronisation pour l'émission, sont lus et émis vers un modulateur correspondant pour permettre le processus d'émission.

6. Procédé selon l'une quelconque des revendications 1 à 5, permettant de constituer des flux de transport audio, vidéo et/ou de données.

7. Procédé selon l'une quelconque des revendications 1 à 5, permettant de transmettre des flux de données différentiels, des signaux DAPSK, DQPSK, DPSK, QAM et/ou OFDM avec différentes procédures de contrôle d'erreurs.

8. Procédé selon l'une quelconque des revendications 1 à 5, destiné à des systèmes d'alimentation SFN (single-frequency-network).
